# EUROPÄISCHE PATENTSCHRIFT

(11) **EP 1 483 797 B1**
(45) Veröffentlichungstag und Bekanntmachung des Hinweises auf die Patenterteilung: **11.11.2009**
(21) Anmeldenummer: 03709660.9
(22) Anmeldetag: 04.03.2003
(51) Int. Cl.: H01M 2/02, H01M 2/04

(54) **BECHERFÖRMIGES GEHÄUSE UND KONDENSATOR MIT DEM GEHÄUSE**
CUP-SHAPED HOUSING AND CONDENSER WITH SAID HOUSING
BOITIER CUPULIFORME ET CONDENSATEUR POURVU DUDIT BOITIER

(30) Priorität: 13.03.2002 DE 20204027 U
(43) Veröffentlichungstag der Anmeldung: 08.12.2004
(73) Patentinhaber: EPCOS AG, 81669 München (DE)
(72) Erfinder: ERHARDT, Werner, 89177 Ballendorf (DE); GOESMANN, Hubertus, 89564 Auernheim (DE); NIEDERBERGER, Gerhard, 89547 Gerstetten (DE); NOWAK, Stefan, 73540 Heubach (DE); SCHOCH, Klaus, 89564 Nattheim (DE)
(74) Vertreter: Epping - Hermann - Fischer
(86) Internationale Anmeldenummer: PCT/DE2003/000688
(87) Internationale Veröffentlichungsnummer: WO 2003/079464

(56) Entgegenhaltungen:
- EP-A- 0 685 895
- EP-A- 1 039 564
- DE-C- 751 677
- FR-A- 2 585 185
- US-A- 4 213 004

## Beschreibung

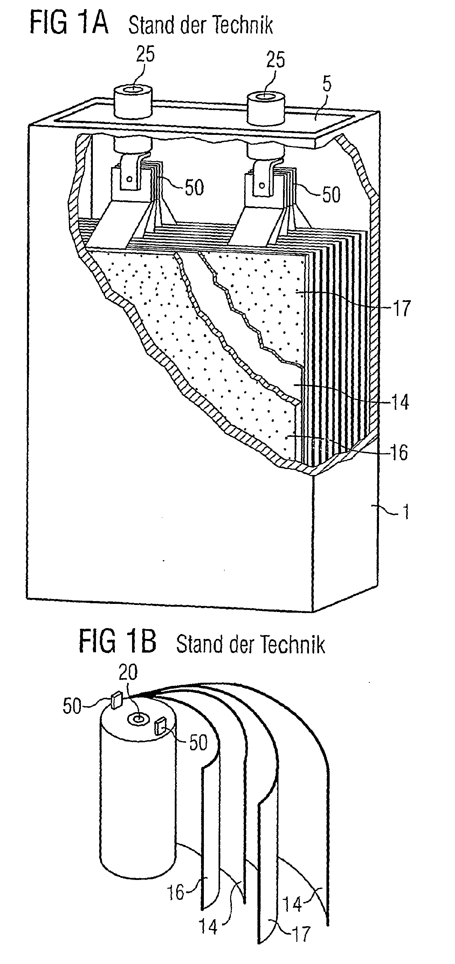

Elektroden von elektrochemischen Zellen, beispielsweise Kondensatoren oder Batterien werden häufig in becherförmigen Gehäusen untergebracht. Diese Gehäuse werden auf einer Seite von einem Boden begrenzt und auf der anderen Seite von einem Deckel abgeschlossen. Auf dem Deckel befinden sich in der Regel zwei elektrische Anschlüsse, die zur Kontaktierung der im Inneren des becherförmigen Gehäuses befindlichen Elektroden dienen. Dabei werden an den Elektroden häufig zusätzliche Ableiter aus elektrisch leitfähigem Material entweder angebracht oder überstehende Bereiche der Elektroden so beschnitten, daß herausstehende Ableiter gebildet werden. Diese Ableiter werden dann entweder mittels Schraubverbindungen mit den elektrischen Anschlüssen verbunden (siehe z.B. Figur 1A) oder durch Schweißen fest mit den elektrischen Anschlüssen verbunden. Eine derartige Kontaktierung zwischen den Elektroden und den elektrischen Anschlüssen ist schwierig zu realisieren und daher in der Produktion sehr zeit- und damit auch kostenaufwendig.

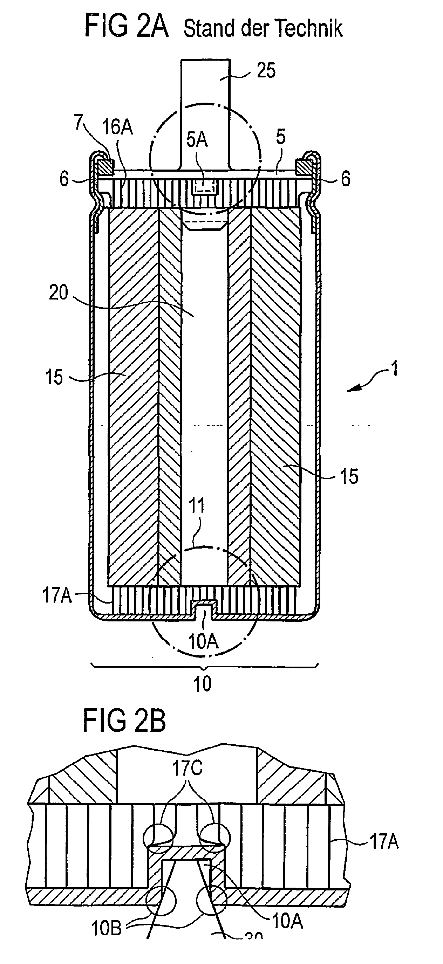

Bei einer anderen Variante von becherförmigen Gehäusen für elektrochemische Zellen werden die Elektroden mittels nach innen gerichteter Einbuchtungen mit rechteckigen Querschnitt kontaktiert, die an den Innenwänden beispielsweise des Deckels und des Gehäusebodens angeordnet sind. In diesem Fall wird der Gehäusebecher mit dem Potential der einen Elektrode beaufschlagt und muß elektrisch vom Deckel isoliert werden, der mit dem Potential der anderen Elektrode beaufschlagt ist. Wie in den Figuren 2A und 2B zu sehen ist, kontaktieren diese Einbuchtungen überstehende Bereiche der Elektroden wobei in der Regel nur eine kleine Kontaktierungsfläche zwischen den Einbuchtungen und den Elektroden vorhanden ist. Derartige Kontaktstellen werden darüber hinaus häufig noch zum Beispiel mittels eines Lasers verschweißt. Da der Laserstrahl im Bereich der Einbuchtung häufig kegelförmig ist, wird er an den Außenkanten der Einbuchtung bei rechteckigen Einbuchtungen abgeschwächt, so daß ein sehr niedriger Energieeintrag des Lasers in das Innere der Einbuchtung resultiert, so daß die Einbuchtung nur ungenügend mit den Elektroden verschweißt werden kann (siehe z.B. Figur 2B).

Die DE 751 677 C offenbart einen Kondensator mit zwei Kontakten einer Elektrode, von denen einer eine Erhebung aufweist.

Die EP 0 685 895 A1, die EP 1 039 564 A1 und die US 4,213,004 offenbaren hermetisch abgedichtete Batterien mit einer Einbuchtung im Deckel für einen besseren Kontakt des Deckels mit einem isolierenden Teil.

Die FR 2 585 185 A1 offenbart einen Kondensator mit einer Einbuchtung im Deckel, die einen besseren Kontakt gewährleistet.

Bei Kondensatoren und Batterien sind dabei häufig zwischen den beiden Elektroden unterschiedlicher Polarität poröse Separatoren vorhanden, die mit einer Elektrolytlösung getränkt sind, so daß beide Elektroden mit der Elektrolytlösung in Kontakt stehen.

Häufig sind bei herkömmlichen Gehäusen elektrische Isolierungen, z.B. Kunststoffspritzteile zwischen dem Gehäuse und dem Deckel vorhanden (siehe z.B. Fig. 1A), wenn Deckel und Gehäuse mit unterschiedlichen Potentialen beaufschlagt sind. Weiterhin sind dabei noch Dichtungsringe vorhanden, die das Gehäuse mit dem Deckel dicht abschließen, so daß die Elektrolytlösung nicht in die Umgebung gelangen kann. Derartige Ausführungsformen erfordern aufgrund des komplizierten Aufbaus eine entsprechend lange und damit kostenintensive Montage.

Es ist daher die Aufgabe der vorliegenden Erfindung, ein becherförmiges Gehäuse für elektrochemische Zellen anzugeben, das eine besonders einfache Kontaktierung zwischen den Elektroden und dem Deckel sowie dem Gehäuse erlaubt.

Diese Aufgabe wird durch ein Gehäuse nach Anspruch 1 gelöst. Vorteilhafte Ausgestaltungen des Gehäuses sind Gegenstand von Unteransprüchen.

Die Erfindung gibt ein becherförmiges Gehäuse für elektrochemische Zellen mit mindestens zwei Elektroden an, wobei das becherförmige Gehäuse einen Deckel aufweist, in dem eine nach innen gerichtete erste Einbuchtung zur Kontaktierung einer ersten Elektrode ausgebildet ist und bei dem im Gehäuseboden des Gehäusebechers eine zweite nach innen gerichtete Einbuchtung zur Kontaktierung einer zweiten Elektrode ausgebildet ist. Dabei weisen die erste und die zweite Einbuchtung einen sich ins Innere des Gehäuses verjüngenden Querschnitt auf.

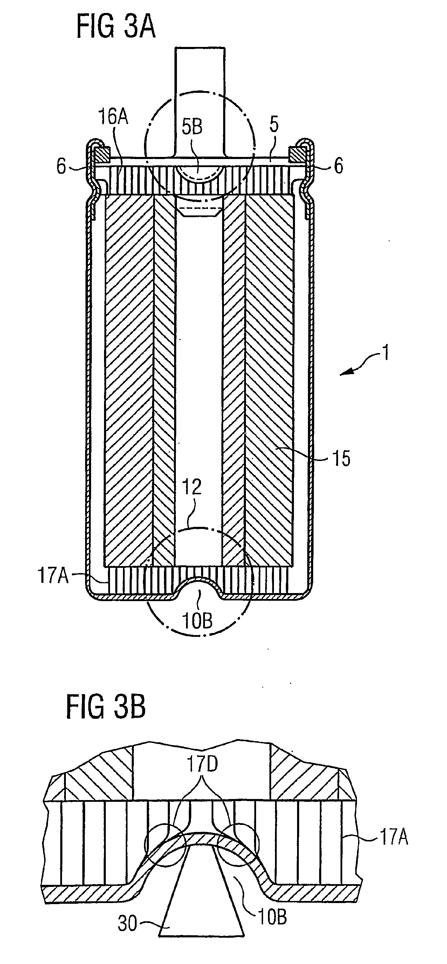

Der Vorteil eines erfindungsgemäßen Gehäuses besteht darin, daß sich aufgrund des sich verjüngenden Querschnitts der ersten und zweiten Einbuchtung eine viel größere Kontaktfläche zwischen der Einbuchtung und den Elektroden ergibt, als bei herkömmlichen Gehäusen. Durch diese spezielle Form der Einbuchtung wird darüber hinaus ein maximaler Kraftschluß zwischen der Einbuchtung und den Elektroden erzielt. Aufgrund des sich ins Innere des Gehäuse verjüngenden Querschnitts der Einbuchtungen ist es darüber besonders leicht möglich, im Falle einer Verschweißung der Kontaktstelle beispielsweise mittels eines Laserstrahls einen hohen Energieeintrag in die Einbuchtung zu ermöglichen, so daß die Elektroden besonders gut mit den Einbuchtungen verschmolzen werden (siehe z.B. auch Fig. 3B).

In einer vorteilhaften Ausgestaltung des Gehäuses erstrecken sich die erste und die zweite Einbuchtung geradlinig über einen Großteil einer Ausdehnungsrichtung des Deckels und des Gehäusebodens. Ein derart ausgestaltetes Gehäuse hat den Vorteil, daß durch die lange räumliche Ausdehnung der Einbuchtungen eine besonders große Kontaktfläche zwischen den Einbuchtungen und den Elektroden geschaffen wird.

In einer weiteren Variante eines erfindungsgemäßen Gehäuses sind die erste und die zweite Einbuchtung jeweils aus einem separaten Bauteil ausgeformt, das auf der Innenseite des Dekkels beziehungsweise auf der Innenseite des Gehäusebodens angebracht ist. Dies kann beispielsweise mittels Verschweißen oder Vernieten geschehen.

Das Material von erfindungsgemäßen Gehäusen kann beispielsweise eine Reihe von Aluminiumlegierungen, zum Beispiel Aluminium 99,5 oder Aluminium 99,9 sowie Aluminiumknetlegierungen umfassen. Der Vorteil dieser Materialien besteht darin, daß sie zum einen elektrisch gut leitfähig sind, so daß sie gut mit dem Potential der Elektroden beaufschlagt werden können, und daß sie zum anderen gute Verformungseigenschaften aufweisen, so daß sie warm oder kalt zum Beispiel durch Fließpressen leicht bearbeitet werden können. Bei erfindungsgemäßen Gehäusen aus diesem Material ist es beispielsweise möglich, die erste und zweite Einbuchtung mittels Fließpressen auszuformen. Auf diese Weise können die Einbuchtungen besonders vorteilhaft in einem Schritt mit dem Gehäuse und mit dem Deckel ausgeformt werden.

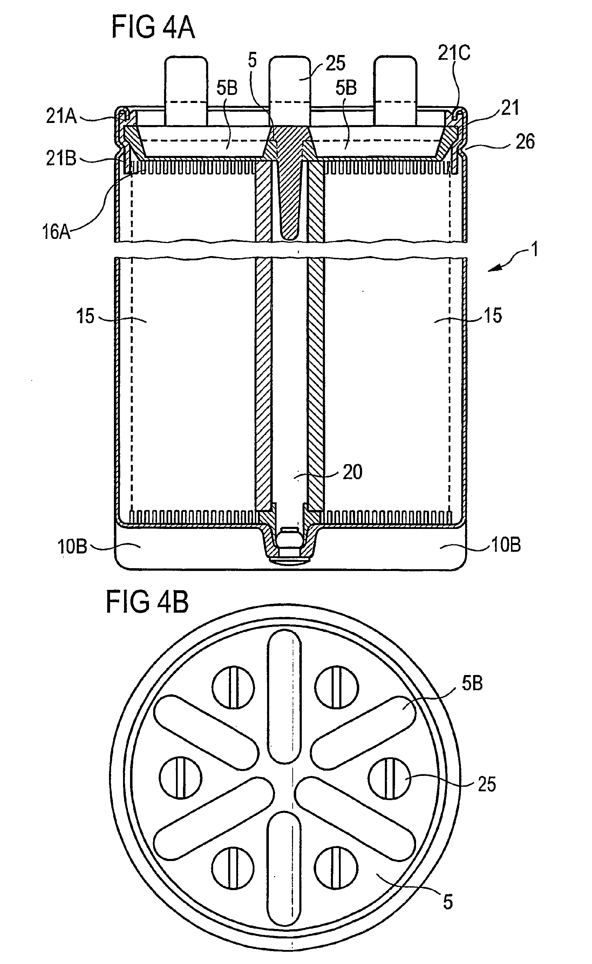

In einer weiteren, vorteilhaften Ausführungsform eines erfindungsgemäßen Gehäuses ist ein elektrisch isolierendes Bauteil aus einem Stück vorhanden, das umlaufend um den Rand des Dekkels verläuft und dicht zwischen dem Deckel und der Wand des Gehäuses angeordnet ist (siehe Fig. 4A). Mittels dieses elektrisch isolierenden Bauteils können erfindungsgemäße Gehäuse besonders einfach gleichzeitig sowohl abgedichtet werden, als auch der Deckel elektrisch vom Gehäuse isoliert werden. Somit sind zwei Funktionen (Abdichtung und elektrische Isolierung) in einem einzigen Bauteil besonders vorteilhaft integriert.

Im Gegensatz zu herkömmlichen Abdichtungen und Isolierungen, die aus zwei Bauteilen bestehen, kann durch das erfindungsgemäß einteilige elektrisch isolierende Bauteil ein besonders einfacher Zusammenbau eines erfindungsgemäßen Gehäuses im Bereich des Deckels gewährleistet werden.

In einer weiteren Ausführungsform sind außerhalb des Gehäuseinneren erste Bereiche des elektrisch isolierenden Bauteils umlaufend um den Rand des Deckels angeordnet, wobei sie eine Einkerbung aufweisen, in die der Rand des Gehäuses zum Gehäuseinneren um den Deckel umlaufend umgelegt ist. Diese Bereiche mit der Einkerbung erlauben dabei eine besonders einfache Bördelung des Gehäuses und damit eine besonders zuverlässige Abdichtung.

Das elektrisch isolierende Bauteil kann dabei Kautschuk, z.B. Acryl-Nitril-Butadien-Kautschuk umfassen.

In einer weiteren Ausgestaltung beschreibt die Erfindung ein becherförmiges Gehäuse, in dem Elektrodenschichten angeordnet sind (d.h. eine elektrochemische Zelle, die ein Kondensator ist). Im Inneren des Gehäuses ist ein Schichtstapel untergebracht, der die erste und die zweite Elektrode, die in diesem Fall als Elektrodenschichten ausgeformt sind, umfaßt. Zwischen den Elektrodenschichten kann sich unter Umständen ein flächig ausgeformter Separator befinden, der mit einer Elektrolytlösung getränkt ist. Die Stirnflächen des Schichtstapels stehen dem Deckel beziehungsweise dem Gehäuseboden gegenüber (siehe zum Beispiel Figur 3A). An den Stirnflächen des Schichtstapels stehen Randbereiche jeweils entweder der ersten oder der zweiten Elektrodenschicht über und sind an den Kontaktstellen mit den Einbuchtungen zur Vergrößerung der Kontaktfläche umgelegt. Dies bedeutet, daß beispielsweise aus der oberen Stirnfläche des Schichtstapels Bereiche der ersten Elektrodenschicht überstehen und aus der Stirnfläche, die dem Gehäuseboden gegenüber steht Bereiche der zweiten Elektrodenschicht gegenüber stehen (siehe Figur 3A). Die an der Innenseite des Deckels befindliche Einbuchtung kontaktiert dann die überstehenden Bereiche der ersten Elektrodenschicht, so daß der Deckel mit dem Potential der ersten Elektrodenschicht beaufschlagt ist. Die im Gehäuseboden ausgeformte Einbuchtung kontaktiert dann die überstehenden Bereiche der zweiten Elektrodenschicht, so daß der Gehäusebecher mit dem Potential der zweiten Elektrodenschicht beaufschlagt ist.

Vorteilhafterweise können die Kontaktstellen zwischen den Einbuchtungen und den Elektrodenschichten verschweißt sein. In diesem Fall resultiert ein besonders inniger Kontakt zwischen den Einbuchtungen und den Elektrodenschichten. Dabei können die Kontaktschichten laserverschweißt sein. Aufgrund der besonderen, sich ins Innere des Gehäuses verjüngenden Querschnittsform der Einbuchtungen kann mittels eines Laserstrahls ein besonders hoher Energieeintrag an die Schweißstelle übertragen werden, so daß mittels eines Laserstrahls besonders gut verschweißt werden kann. Der hier beschriebene Schichtstapel kann dabei auch zu einem Kondensatorwickel aufgerollt sein.

Im Folgenden soll die Erfindung anhand von Ausführungsbeispielen und Figuren noch näher erläutert werden.
Figur 1A zeigt einen herkömmlichen Kondensator der einen Schichtstapel enthält, der Elektrodenschichten umfaßt.
Figur 1B zeigt einen herkömmlichen Kondensatorwickel, der in einem Gehäuse untergebracht sein kann.

Die Figuren 2A und 2B zeigen einen herkömmlichen Kondensator mit Einbuchtungen, die einen rechteckigen Querschnitt aufweisen, in Querschnitt und im Detail.

Die Figuren 3A und 3B zeigen einen Kondensator mit einem erfindungsgemäßen Gehäuse im Querschnitt und im Detail.

Die Figuren 4A und 4B zeigen einen Kondensator mit einer weiteren Variante eines erfindungsgemäßen Gehäuses im Querschnitt und in der Aufsicht.

In Figur 1A ist ein Kondensator mit einem herkömmlichen Gehäuse zu sehen. In dem Kondensatorgehäuse 1 befindet sich ein Schichtstapel, der aus einer ersten Elektrodenschicht 16 einer zweiten Elektrodenschicht 17 und einem dazwischen befindlichen Separator 14 besteht. Der Separator ist üblicherweise mit einer Elektrolytlösung imprägniert. Am Deckel 5 des Gehäuses 1 befinden sich elektrische Anschlüsse 25, die die erste beziehungsweise zweite Elektrodenschicht über Ableiter 50 kontaktieren, die an den Elektrodenschichten angebracht sind. Eine derartige Kontaktierung der elektrischen Anschlüsse mit den Elektrodenschichten ist wie bereits oben beschrieben nur sehr aufwendig zu realisieren.

Anstelle des in Figur 1A gezeigten Schichtstapels kann auch ein Kondensatorwickel in das Gehäuse eingebracht sein. Dabei sind um ein Kernrohr beziehungsweise einen Dorn, nach dessen Entfernung das Loch 20 verbleibt, eine erste Elektrodenschicht 16, ein Separator 14, sowie eine zweite Elektrodenschicht 17 aufgewickelt. Auch bei dieser Ausführungsform des Kondensators können die jeweiligen Elektrodenschichten über hervorstehende Ableiter 50 kontaktiert werden.

Figur 2A zeigt eine weitere Ausführungsform eines Kondensators mit herkömmlichem Gehäuse. Zu sehen ist, daß im Gehäuse 1 der Kondensatorwickel 15 eingebracht ist, wobei sich in der Mitte des Kondensatorwickels 15 das Loch 20 befindet, das nach der Entfernung des Kernrohrs beziehungsweise des Dorns verbleibt. Der Deckel 5 mit dem elektrischen Anschluß 25 weist eine nach innen gerichtete im Querschnitt rechteckige Einbuchtung 5a auf, die die überstehenden Bereiche 16a der zweiten Elektrodenschicht 16 kontaktiert. Der Kondensatordekkel ist also mit dem Potential der ersten Elektrodenschicht beaufschlagt. Im Gehäuseboden befindet sich eine zweite Einbuchtung 10a, die im Querschnitt ebenfalls rechteckig ist wobei diese die überstehenden Bereiche 17a der zweiten Elektrodenschicht 17 kontaktiert. Der Gehäusebecher ist also mit dem Potential der zweiten Elektrodenschicht beaufschlagt. Zur elektrischen Isolierung befindet sich zwischen dem Gehäusebecher und dem Deckel eine elektrische Isolierung 6. Weiterhin ist ein Dichtungsring 7 vorhanden. In Figur 2B ist der in Figur 2a mit 11 bezeichnetem Kreis vergrößert zu sehen. Zu erkennen ist, daß die zweite Einbuchtung 10a in diesem Fall aufgrund des rechteckigen Querschnitts nur eine sehr kleine Kontaktfläche 17C zu den überstehenden Bereichen 17A der zweiten Elektrodenschicht 17 aufweist. Weiterhin ist schematisch der Kegel 30 eines Laserstrahls dargestellt. Deutlich ist zu erkennen, daß die äußeren Kanten 10B der Einbuchtung 10A in den Laserkegel 30 ragen und somit den Energieeintrag des Lasers in die Einbuchtung reduzieren. Aufgrund dieser Reduzierung des Energieeintrags kommt es beim Schweißen zu keiner so guten Verbindung zwischen der Einbuchtung 10A und der Kontaktfläche 17C mit den überstehenden Bereichen 17A der zweiten Elektrodenschicht.

In Figur 3a ist ein Kondensator mit einem erfindungsgemäßen Gehäuse zu sehen. Sowohl im Deckel 5 als auch im Boden des Bechers befinden sich nach innen gerichtete Einbuchtungen 5B beziehungsweise 10B. Beide Einbuchtungen weisen nach innen einen sich verjüngenden Querschnitt auf. In Figur 3B ist der in Figur 3A mit 12 verzeichnete Kreis vergrößert dargestellt. Zu sehen ist, daß aufgrund des sich verjüngenden Querschnitts der Einbuchtung 10B besonders große Kontaktflächen 17D zwischen der Einbuchtung und den überhängenden Bereichen 17A der zweiten Elektrodenschicht 17 resultieren. Dabei können an der Kontaktstelle die überhängenden Bereiche der Elektrodenschichten so umgelegt sein, daß eventuell zwei oder mehrere Elektrodenschichten übereinander liegen und komprimiert werden, so daß ein besonders guter Kontakt zwischen der Einbuchtung und den Elektrodenschichten resultiert. Weiterhin ist deutlich zu erkennen, daß ein kegelförmiger Laserstrahl 30 der hier schematisch dargestellt ist, nicht durch die Kanten der Einbuchtung geschwächt wird, so daß ein besonders guter Energieeintrag des Laserstrahls möglich ist und damit eine besonders gute Verschweißung zwischen der Einbuchtung und den Kontaktstellen 17D mit den überhängenden Bereichen der Elektrodenschicht möglich ist.

Figur 4A zeigt einen Kondensator mit einer weiteren Variante eines erfindungsgemäßen Gehäuses. Zu sehen ist, daß in diesem Fall die Einbuchtungen sowohl im Deckel als auch im Becherboden langgestreckt ausgeformt sind. Durch diese besondere Formgebung der Einbuchtungen resultiert eine besonders große Kontaktfläche zwischen den Einbuchtungen und den Elektrodenschichten. Weiterhin ist ein elektrisch isolierendes Bauteil 21 vorhanden. Dieses Bauteil 21 ist dicht zwischen dem Deckel 5 und der Wand des Gehäuses 1 angeordnet und isoliert somit gleichzeitig den Deckel elektrisch vom Gehäuse und dichtet das Gehäuse ab. Erste Bereiche 21A des elektrisch isolierenden Bauteils sind außerhalb des Gehäuseinneren umlaufend um den Deckel angeordnet und weisen eine Einkerbung 21C auf, in die der Rand des Gehäuses umgelegt ist. Somit läßt sich eine besonders einfache Bördelung mittels des elektrisch isolierenden Bauteils 21 realisieren. Darüber hinaus sind im Inneren des Gehäuses zweite Bereiche 21B des elektrisch isolierenden Bauteils vorhanden, die zwischen der Wand des Gehäuses und den überstehenden Randbereichen 16A der ersten Elektrodenschicht angeordnet sind. Diese Bereiche 21B isolieren besonders einfach die überstehenden Randbereiche der Elektrode vom Gehäuse. In der Wand des Gehäuses ist eine umlaufende Einbuchtung 26 in Form einer Sicke ausgeformt, die zusätzlich das elektrisch isolierende Bauteil 21 fixiert.

In Figur 4B ist der Deckel des in Figur 4A gezeigten Gehäuses in der Aufsicht zu sehen. Zu erkennen ist, daß sechs sternförmig angeordnete Einbuchtungen 5B im Gehäusedeckel vorhanden sind, die einen besonders innigen Kontakt zur Elektrodenschicht herstellen können. Weiterhin sind auf dem Gehäuse ein oder mehrere elektrische Anschlüsse 25 ausgebildet.

Die Erfindung beschränkt sich nicht auf die hier gezeigten Ausführungsbeispiele. Weitere Variationen sind sowohl bezüglich der Anzahl der Einbuchtungen im Gehäuse, als auch bezüglich deren Ausformungen möglich. Die Elektroden, die mittels der Einbuchtungen kontaktiert werden, können ebenfalls unterschiedlich ausgeformt sein. So kommen beispielsweise neben dem gezeigten Schichtstapel auch Wickel, oder anders ausgeformte Elektroden in Betracht.

## Patentansprüche

1. Becherförmiges Gehäuse (1) für elektrochemische Zellen, die zumindest zwei Elektroden (16,17) aufweisen,
- mit einem Deckel (5), in dem eine nach innen gerichtete erste Einbuchtung (5B) zur Kontaktierung einer ersten Elektrode (16) ausgebildet ist,
- bei dem im Gehäuseboden (10) eine zweite nach innen gerichtete Einbuchtung (10B) zur Kontaktierung einer zweiten Elektrode (17) ausgebildet ist,
- bei dem die erste und die zweite Einbuchtung (5B,10B) einen sich ins Innere des Gehäuses verjüngenden Querschnitt aufweisen.

2. Gehäuse nach dem vorhergehenden Anspruch,
- bei dem die erste und die zweite Einbuchtung sich geradlinig über den Großteil einer Ausdehnungsrichtung des Deckels und des Gehäusebodens erstrecken.

3. Gehäuse nach einem der vorhergehenden Ansprüche,
- bei dem die erste und die zweite Einbuchtung jeweils aus einem separaten Bauteil ausgeformt sind.

4. Gehäuse nach einem der vorherigen Ansprüche,
- bei dem das Material des Gehäuses und des Deckels Aluminium oder Aluminiumknet-Legierungen umfaßt.

5. Gehäuse nach einem der vorhergehenden Ansprüche,
- bei dem ein elektrisch isolierendes Bauteil (21) aus einem Stück vorhanden ist, das umlaufend um den Rand des Deckels (5) verläuft und zur Abdichtung und zur elektrischen Isolierung dicht zwischen dem Deckel (5) und der Wand des Gehäuses (1) angeordnet ist.

6. Gehäuse nach dem vorhergehenden Anspruch,
- bei dem erste Bereiche (21A) des elektrisch isolierenden Bauteils (21) umlaufend um den Deckel (5) außerhalb des Gehäuseinneren angeordnet sind und eine Einkerbung (21c) aufweisen,
- bei dem der Rand (1A) des Gehäuses zum Gehäuseinneren hin um den Deckel umlaufend umgelegt ist, so daß der umgelegte Rand innerhalb der Einkerbung des elektrisch isolierenden Bauteils angeordnet ist.

7. Gehäuse nach einem der vorhergehenden Ansprüche 5 oder 6,
- bei dem das elektrisch isolierende Bauteil Kautschuk umfaßt.

8. Gehäuse nach einem der vorhergehenden Ansprüche, enthaltend Elektroden eines Kondensators, wobei
- ein Schichtstapel, der die erste (16) und die zweite Elektrode (17), die als Elektrodenschichten ausgeformt sind, umfaßt, im Gehäuse so untergebracht ist, daß die Stirnflächen des Schichtstapels dem Deckel (5) und dem Gehäuseboden (10) gegenüberstehen, und
- aus den Stirnflächen des Schichtstapels Randbereiche jeweils entweder der ersten (16A) oder zweiten Elektrodenschicht (17A) überstehen und an den Kontaktstellen mit den Einbuchtungen (5B, 10B) zur Vergrößerung der Kontaktfläche umgelegt sind.

9. Gehäuses (1) nach einem der Ansprüche 5 bis 7, enthaltend Elektroden eines Kondensators, wobei
- ein Schichtstapel, der die erste (16) und die zweite Elektrode (17), die als alternierende Elektrodenschichten ausgeformt sind, umfaßt, im Gehäuse so untergebracht ist, daß die von den Außenkanten der Elektrodenschichten gebildeten Stirnflächen des Schichtstapels dem Deckel (5) und dem Gehäuseboden (10) gegenüberstehen,
- aus den Stirnflächen des Schichtstapels Randbereiche jeweils entweder der ersten (16A) oder zweiten Elektrodenschicht (17A) überstehen und an den Kontaktstellen mit den Einbuchtungen (5B, 10B) zur Vergrößerung der Kontaktfläche umgelegt sind, und
- zweite Bereiche (21B) des elektrisch isolierenden Bauteils (21) im Inneren des Gehäuses vorhanden sind und zur elektrischen Isolierung zwischen der Wand des Gehäuses und den umgelegten Randbereichen der ersten (16A) oder der zweiten Elektrodenschicht (17A) angeordnet sind.

10. Gehäuse nach dem vorhergehenden Anspruch,
- bei dem die Kontaktstellen zwischen den Einbuchtungen und den Elektrodenschichten verschweißt sind.

11. Gehäuse nach dem vorhergehenden Anspruch,
- bei dem die Kontaktstellen laserverschweißt sind.

12. Gehäuse nach einem der Ansprüche 8 bis 11,
- bei dem der Schichtstapel zu einem Kondensatorwickel aufgerollt ist.

## Claims

1. Cup-shaped housing (1) for electrochemical cells which have at least two electrodes (16, 17),
- having a lid (5) in which there is formed an inwardly directed first indentation (5B) for making contact with a first electrode (16),
- in the case of which housing there is formed in the housing base (10) a second inwardly directed indentation (10B) for making contact with a second electrode (17), and
- in the case of which housing the first and the second indentations (5B, 10B) have a cross section tapering into the interior of the housing.

2. Housing according to the preceding claim,
- wherein the first and the second indentations extend rectilinearly over the major part of the direction of extent of the lid and the housing base.

3. Housing according to one of the preceding claims,
- wherein the first and the second indentations are respectively formed from a separate component.

4. Housing according to one of the preceding claims,
- wherein the material of the housing and of the lid comprises aluminium or wrought aluminium alloys.

5. Housing according to one of the preceding claims,
- wherein there is present an electrically insulating component (21) which is made from one piece, runs around the edge of the lid (5) and is arranged tightly between the lid (5) and the wall of the housing (1) for the purposes of sealing and electrical insulation.

6. Housing according to the preceding claim,
- wherein first regions (21A) of the electrically insulating component (21) are arranged running around the lid (5) outside the housing interior and have a notch (21c), and
- in which the edge (1A) of the housing is folded over towards the housing interior in a fashion running around the lid such that the folded over edge is arranged inside the notch of the electrically insulating component.

7. Housing according to one of the preceding Claims 5 or 6,
- wherein the electrically insulating component comprises rubber.

8. Housing according to one of the preceding claims, containing electrodes of a capacitor, wherein- a layer stack comprising the first electrode (16) and the second electrode (17), which are formed as electrode layers, is accommodated in the housing such that the end faces of the layer stack are opposite the lid (5) and the housing base (10), and
- edge regions of respectively either the first electrode layer (16A) or second electrode layer (17A) project from the end faces of the layer stack, and are folded over at the contact points with the indentations (5B, 10B) in order to enlarge the contact surface.

9. Housing (1) according to one of Claims 5 to 7, containing electrodes of a capacitor, wherein
- a layer stack comprising the first electrode (16) and the second electrode (17), which are formed as alternating electrode layers, is accommodated in the housing such that the end faces, formed from the outer edges of the electrode layers, of the layer stack are opposite the lid (5) and the housing base (10),
- edge regions of respectively either the first electrode layer (16A) or second electrode layer (17A) project from the end faces of the layer stack, and are folded over at the contact points with the indentations (5B, 10B) in order to enlarge the contact surface, and
- second regions (21B) of the electrically insulating component (21) are present in the interior of the housing and are arranged between the wall of the housing and the folded over edge regions of the first electrode layer (16A) or the second electrode layer (17A) for the purpose of electrical insulation.

10. Housing according to the preceding claim,
- wherein the contact points between the indentations and the electrode layers are welded.

11. Housing according to the preceding claim,
- wherein the contact points are laser welded.

12. Housing according to one of Claims 8 to 11,
- wherein the layer stack is rolled up to form a capacitor winding.

## Revendications

1. Boîtier (1) cupuliforme pour des piles électrochimiques qui ont au moins deux électrodes (16, 17),
- comprenant un couvercle (5) dans lequel un premier bossage (5B) rentrant vers l'intérieur est formé pour la mise en contact d'une première électrode (16),
- dans lequel il est formé dans le fond (10) du boîtier un deuxième bossage (10B) rentrant vers l'intérieur pour la mise en contact d'une deuxième électrode (17),
- dans lequel le premier et le deuxième bossages (5B, 10B) ont une section transversale se rétrécissant à l'intérieur du boîtier.

2. Boîtier suivant la revendication précédente,
- dans lequel le premier et le deuxième bossages s'étendent en ligne droite sur la plus grande partie d'une direction de dilatation du couvercle et du fond du boîtier.

3. Boîtier suivant l'une des revendications précédentes,
- dans lequel le premier et le deuxième bossages sont formés respectivement d'un élément distinct.

4. Boîtier suivant l'une des revendications ci-dessus,
- dans lequel le matériau du boîtier et du couvercle comprend de l'aluminium ou des alliages corroyés d'aluminium.

5. Boîtier suivant l'une des revendications précédentes,
- dans lequel il y a un élément (21) isolant du point de vue électrique en une pièce, qui s'étend autour du bord du couvercle (5) et qui est disposé, pour l'étanchéité et pour l'isolation électrique, d'une manière étanche entre le couvercle (5) et la paroi du boîtier (1).

6. Boîtier suivant la revendication précédente,
- dans lequel des premières parties (21A) de l'élément (21) isolant électriquement sont disposées autour du couvercle (5) à l'extérieur de l'intérieur du boîtier et ont une encoche (21c),
- dans lequel le bord (1A) du boîtier est entouré vers l'intérieur du boîtier et en entourant le couvercle, de façon à ce que le bord entouré soit disposé à l'intérieur de l'encoche de l'élément isolant du point de vue électrique.

7. Boîtier suivant les revendications précédentes 5 ou 6,
- dans lequel l'élément isolant du point de vue électrique comprend du caoutchouc.

8. Boîtier suivant l'une des revendications précédentes comprenant des électrodes d'un condensateur dans lequel,
- un empilement de couches, qui comprend la première (16) et la deuxième électrode (17) qui sont formées sous forme de couches d'électrode, est logé dans le boîtier de façon à ce que les faces frontales de l'empilement de couches soit en face du couvercle (5) et du fond (10) du boîtier, et
- des parties de bord respectivement de la première (16A) ou de la deuxième couche (17A) d'électrode dépassent des surfaces frontales de l'empilement de couches et sont entourées aux points de contact des bossages (5B, 10B) pour agrandir la surface de contact.

9. Boîtier (1) suivant l'une des revendications 5 à 7, comportant des électrodes d'un condensateur, dans lequel
- un empilement de couches, qui comprend la première (16) et la deuxième électrode (17) formées sous la forme de couches d'électrode en alternance, est logé dans le boîtier de manière à ce que les surfaces frontales de l'empilement de couches, qui sont formées par les bords extérieurs des couches d'électrodes, soient en face du couvercle (5) et du fond (10) du boîtier,
- des parties de bord respectivement de la première (16A) ou de la deuxième couche (17A) d'électrode dépassent des surfaces frontales de l'empilement de couches et sont entourées aux points de contact par les bossages (5B, 10B) pour agrandir la surface de contact, et
- des deuxièmes parties (21B) de l'élément (21) isolant du point de vue électrique sont présentes à l'intérieur du boîtier et sont, pour l'isolation électrique, disposées entre la paroi du boîtier et les parties du bord entourées de la première (16A) ou de la deuxième couche (17A) d'électrode.

10. Boîtier suivant la revendication précédente,
- dans lequel les points de contact entre les bossages et les couches d'électrode sont soudés.

11. Boîtier suivant la revendications précédente,
- dans lequel les points de contact sont soudés au laser.

12. Boîtier suivant l'une des revendications précédentes,
- dans lequel l'empilement des couches est enroulé en un enroulement de condensateur.
